# EUROPEAN PATENT APPLICATION

(11) **EP 3 032 074 A1**
(43) Date of publication of application: **15.06.2016**
(21) Application number: 15199411.8
(22) Date of filing: 10.12.2015
(51) Int. Cl.: F02C 7/32, F02C 7/36

(54) **DUAL TOWER SHAFT GEARBOX FOR GAS TURBINE ENGINE**

(30) Priority: 12.12.2014 US 201462091054 P
(71) Applicant: United Technologies Corporation, Farmington, CT 06032 (US)
(72) Inventor: DUONG, Hung, Unionville, CT Connecticut 06085 (US)
(74) Representative: Leckey, David Herbert

(57) **Abstract**

A gas turbine engine (20) includes a turbine section (28) that has first and second turbines (46,54) mounted for rotation about a common rotational axis within an engine static structure (36). First and second turbine shafts (40,52) are also provided coaxial with one another, and to which the first and second turbines (46,54) are respectively operatively mounted. First and second tower shafts (68,70) are respectively coupled to the first and second turbine shafts (40,54). An accessory drive gearbox (60) is mounted to the engine static structure (36). The accessory drive gearbox (60) includes gears (64,66) arranged within a common housing (62). The first and second tower shafts (68,70) extend into the common housing (62) and are coupled to the gears (64,66).

## Description

### BACKGROUND

This disclosure relates to an accessory drive gearbox for a gas turbine engine.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

A typical gas turbine engine utilizes one or more gearboxes to drive accessory components, such as generators, fuel pumps and oil pumps. Each of the accessory drive components must be driven at a desired rotational speed. As a result, the accessory is coupled to either the low or high speed spool and geared accordingly to obtain the speed at which the accessory operates more efficiently. Thus, it is not uncommon to use one gearbox coupled to the low spool to drive lower speed accessory drive components, and use a separate gearbox coupled to the high spool to drive the other accessory drive components at a higher speed.

One gearbox has been proposed in which both high and low speed accessory drive components are driven by a single tower shaft. Gearing within the gearbox obtains a desired rotational speed and direction for each of the accessory drive components.

### SUMMARY

In one exemplary embodiment, a gas turbine engine includes a turbine section that has first and second turbines mounted for rotation about a common rotational axis within an engine static structure. First and second turbine shafts coaxial with one another and to which the first and second turbines are respectively operatively mounted. First and second tower shafts respectively coupled to the first and second turbine shafts. An accessory drive gearbox is mounted to the engine static structure. The accessory drive gearbox includes gears arranged within a common housing. The first and second tower shafts extend into the common housing and are coupled to the gears.

In a further embodiment of the above, the first and second turbine shafts are inner and outer shafts, respectively. The first and second turbines are low and high pressure turbines, respectively.

In a further embodiment of any of the above, the second tower shaft is configured to rotate at a higher speed than the first tower shaft.

In a further embodiment of any of the above, a first set of accessories are configured to be rotationally driven by the first tower shaft. A second set of accessories are configured to be rotationally driven by the second tower shaft.

In a further embodiment of any of the above, the first set of accessories includes at least one of a generator, a deoiler and a hydraulic pump.

In a further embodiment of any of the above, the second set of accessories includes at least one of a generator, a fuel pump, an oil pump and a permanent magnet alternator.

In a further embodiment of any of the above, the first and second tower shafts extend in a generally radial direction from the rotational axis. The first and second tower shafts are arranged at an angle circumferentially relative to one another.

In a further embodiment of any of the above, the angle is less than 90°.

In a further embodiment of any of the above, the gears include first and second sets of gears respectively coupled to the first and second tower shafts. The the first set of gears is not in meshing engagement with the second set of gears.

In a further embodiment of any of the above, at least a portion of the first and second sets of gears circumferentially overlap one another.

In a further embodiment of any of the above, the housing includes a locating feature that is configured to circumferentially locate and align at least one of the first and second tower shafts relative to at least one of the first and second turbine shafts.

In a further embodiment of any of the above, the locating feature includes a bore and a first cover that has an eccentric pilot received in the bore. The first cover includes a hole and is rotatable within the bore to reposition the hole relative to the housing. The hole supports one of the first and second tower shafts.

In a further embodiment of any of the above, the housing includes a second cover opposite the first cover and is configured to facilitate insertion of one of the first and second tower shafts into the housing during assembly.

In another exemplary embodiment, there is a method of installing an accessory gearbox onto a gas turbine engine. The method includes the steps of mounting a gearbox housing onto an engine static structure. The gearbox housing has first and second opposing sides. A first tower shaft is inserted into the first side of the housing, through the second side, and into the engine static structure to couple the first tower shaft with a first turbine shaft in the static structure and a first gear set in the gearbox housing. A second tower shaft is inserted into the first side of the housing, through the second side, and into the engine static structure to couple the second tower shaft with a second turbine shaft in the static structure and a second gear set in the gearbox housing.

In a further embodiment of any of the above, the first set of gears is not in meshing engagement with the second set of gears.

In a further embodiment of any of the above, the method includes the step of adjusting a position of a locating feature to circumferentially locate and align at least one of the first and second tower shafts relative to at least one of the first and second turbine shafts.

In a further embodiment of any of the above, a turbine section has first and second turbines mounted for rotation about a common rotational axis within the engine static structure. The first and second turbine shafts coaxial with one another and to which the first and second turbines are respectively operatively mounted. The first and second turbine shafts are inner and outer shafts, respectively. The first and second turbines are low and high pressure turbines, respectively. The second tower shaft is configured to rotate at a higher speed than the first tower shaft.

In a further embodiment of any of the above, the inserting steps include installing the first and second tower shafts in a generally radial direction relative to the rotational axis. The first and second tower shafts are at an acute angle circumferentially relative to one another.

In a further embodiment of any of the above, the method includes the step of mounting first and second sets of accessories to the gearbox. The first set of accessories includes at least one of a generator, a deoiler and a hydraulic pump. The second set of accessories includes at least one of a generator, a fuel pump, an oil pump and a permanent magnet alternator.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic view illustrating a common accessory drive gearbox driven by both high and low speed spools.
Figure 3 is a perspective view of the accessory drive gearbox mounted to a gas turbine engine.
Figure 4 is a perspective view of the accessory drive gearbox with the accessory drive components mounted thereto.
Figure 5A is an end view of the accessory drive gearbox illustrating first and second sets of gears with a gearbox housing shown in phantom.
Figure 5B is a top elevational view of the accessory drive gearbox shown in Figure 5A.
Figure 6 is an enlarged cross-sectional view through a housing portion of the gearbox and a tower shaft.
Figure 7 is an elevational view of the housing portion shown in Figure 6.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

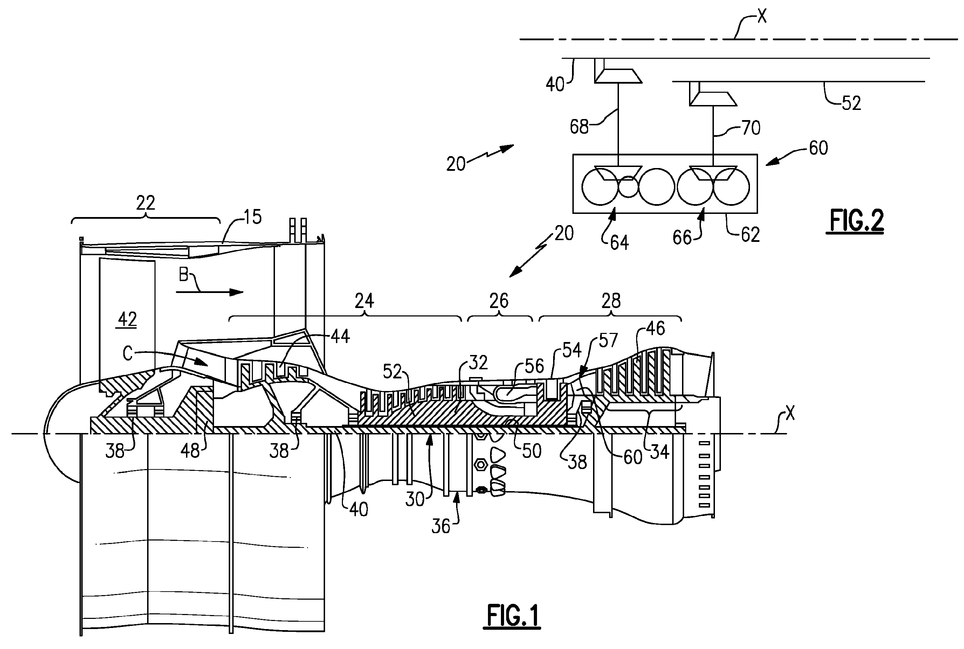

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

Referring to Figure 2, the engine 10 includes an accessory drive gearbox 60, or gearbox, that is rotationally driven by both the inner and outer shafts 40, 52. The gearbox 60 includes a housing 62 within which first and second sets of gears 64, 66 are arranged. A first tower shaft 68 interconnects the inner shaft 42 to the first set of gears 64, and a second tower shaft 70 interconnects the outer shaft 52 to the second set of gears 66.

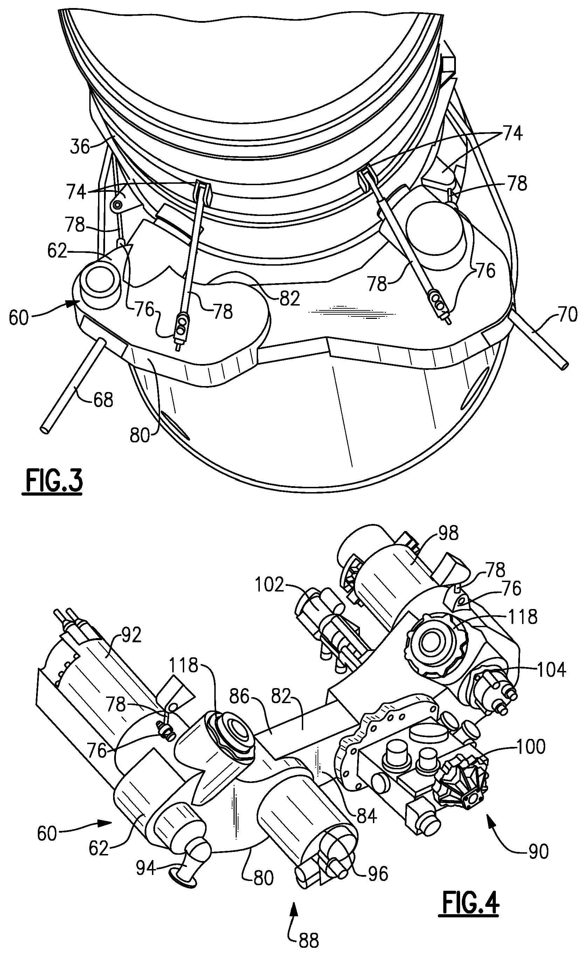

Referring to Figures 3 and 4, the engine static structure 36 includes first bracket 74, and the gearbox 60 includes second bracket 76. Multiple mounting rods 78 are used to connect the first and second brackets 74, 76 to one another and mount the gearbox 60 relative to the engine static structure 36. The rods 78 may be adjustable to position the tower shafts 68, 70 relative to the engine static structure 36.

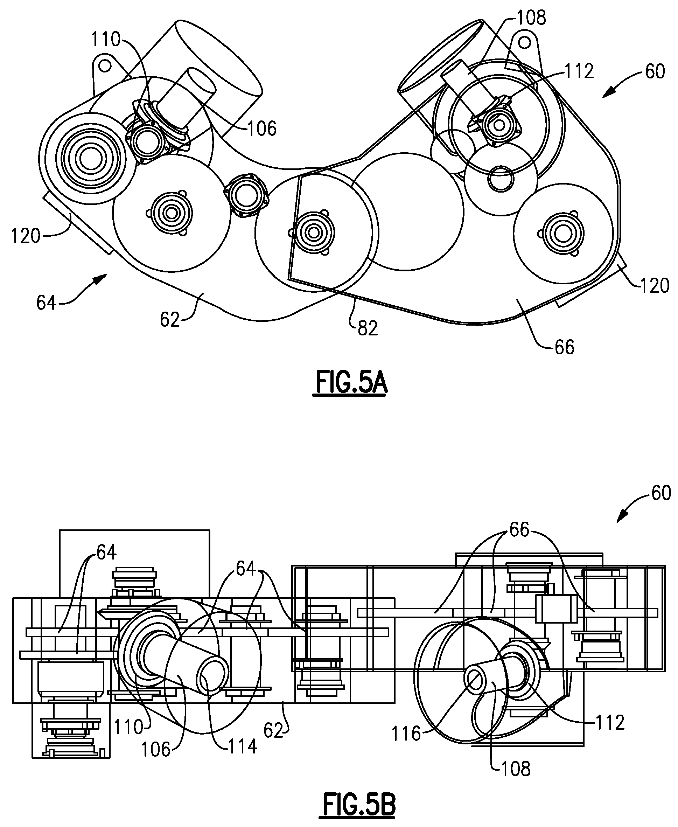

The gearbox 60 includes first and second opposing sides 80, 82. In one example, the first and second tower shafts 68, 70 are inserted (shown in Figure 3) into the first side 80 of the housing 62 and through the second side 82 into the engine static structure 36. As a result, the first and second tower shafts can be installed in a generally radial direction from the rotational axis X such that the first and second tower shafts 68, 70 form an angle circumferentially relative to one another. In the example shown, the angle is less than 90°. Once the tower shafts 68, 70 are installed, a cover (second cover 120 in Figure 5A) may be placed over the apertures in the second side 82.

Referring to Figure 4, the housing 62 includes first and second opposing faces 84, 86 to which first and second sets of accessory drive components 88, 90 are mounted and arranged generally longitudinally in the direction of the engine's axis X. In one example, the first set of accessory drive components 88 includes a generator 92, a deoiler 94, and a hydraulic pump 96. The second set of accessory drive components 90 include another generator 98, a fuel pump 100, an oil pump 102, and a permanent magnet alternator 104, for example. The first set of accessory drive components 88 are driven by the first tower shaft 68 through the first set of gears 64, and the second set of accessory drive components 90 is driven by the second tower shaft 70 through the second set of gears 66.

Referring to Figures 5A and 5B, the first set of gears 64 do not mesh with the second sets of gears 66. That is, the second set of gears 66 do not receive any rotational input from the first tower shaft 68, and the first set of gears 64 do not receive any rotational input from the second tower shaft 70. To provide a more compact package, at least a portion of the first and second sets of gears 64, 66 circumferentially overlap one another, as best shown in Figure 5B.

The first tower shaft 68 is inserted through a first stub shaft 106, which is coupled to a first bevel gear 110. The first stub shaft 106 includes a first splined hole 114 that meshes with an end of the first tower shaft 68 once inserted into the gearbox 60. Similarly, the gearbox 60 includes a second stub shaft 108 coupled to a second bevel gear 112. The second stub shaft 108 includes a second splined hole 116, which is interconnected to the second tower shaft 70 once installed. The tower shafts 68, 70 extend through first covers 118 mounted on the first side 80, shown in Figure 4. Second covers 120 are arranged over apertures in the second side 82, shown in Figure 5A, once the tower shafts 68, 70 have been installed into the gearbox 60.

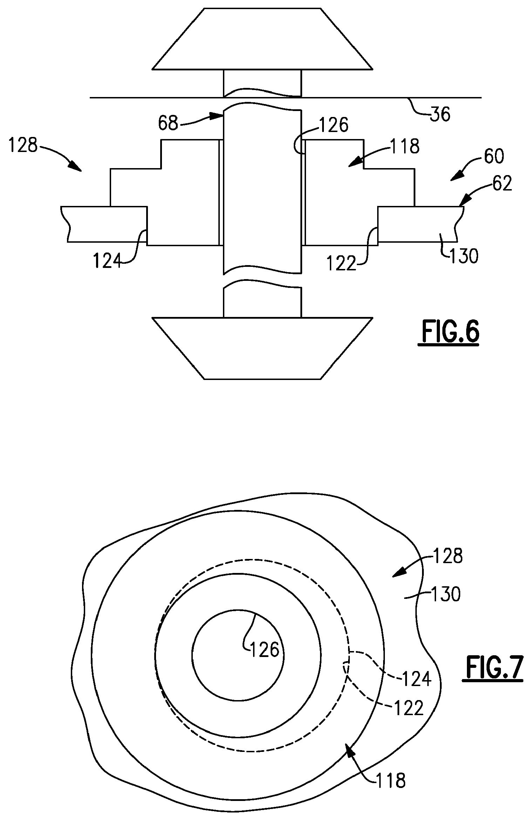

Since there are two tower shafts extending from the same gearbox 60, it may be desirable to incorporate a locating feature to reposition at least one of the tower shafts and align it with features in the gas turbine engine, such as the inner and outer shafts 40, 52. In one example shown in Figures 6 and 7, the locating feature 128 includes a bore 122 in a housing portion 130 of the housing 62. The first cover 118 includes an eccentric pilot 124 with respect to a hole 126 that receives the tower shaft. The first cover 118 may be rotated with respect to the housing portion 130 to reposition the hole 126 and its supported tower shaft. In this manner, slight positional adjustments of the tower shaft may be provided. This locating feature may be provided on the engine static structure 36 instead of or in addition to providing this feature on the gearbox 60.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine (20) comprising:
a turbine section (28) having first and second turbines (46,54) mounted for rotation about a common rotational axis within an engine static structure (36);
first and second turbine shafts (40,52) coaxial with one another and to which the first and second turbines (46,54) are respectively operatively mounted;
first and second tower shafts (68,70) respectively coupled to the first and second turbine shafts (40,52); and
an accessory drive gearbox (60) mounted to the engine static structure, the accessory drive gearbox (60) including gears (64,66) arranged within a common housing (62), the first and second tower shafts (68,70) extending into the common housing (62) and coupled to the gears (64,66).

2. The gas turbine engine according to claim 1, wherein the first and second turbine shafts (40,52) are inner and outer shafts, respectively, and the first and second turbines (46,54) are low and high pressure turbines, respectively.

3. The gas turbine engine according to claim 2, wherein the second tower shaft (70) is configured to rotate at a higher speed than the first tower shaft (68).

4. The gas turbine engine according to claim 2 or 3, wherein a first set of accessories (88) are configured to be rotationally driven by the first tower shaft (68), and a second set of accessories (90) are configured to be rotationally driven by the second tower shaft (70), wherein, optionally, the first set of accessories (88) includes at least one of a generator (92), a deoiler (94) and a hydraulic pump (96) and/or the second set of accessories (90) includes at least one of a generator (98), a fuel pump (100), an oil pump (102) and a permanent magnet alternator (104).

5. The gas turbine engine according to any preceding claim, wherein the first and second tower shafts (68,70) extend in a generally radial direction from the rotational axis, the first and second tower shafts (68,70) arranged at an angle circumferentially relative to one another.

6. The gas turbine engine according to claim 5, wherein the angle is less than 90°.

7. The gas turbine engine according to any preceding claim, wherein the gears include first and second sets of gears (64,66) respectively coupled to the first and second tower shafts (68,70) and wherein, the first set of gears (64) is not in meshing engagement with the second set of gears (66).

8. The gas turbine engine according to claim 7, wherein at least a portion of the first and second sets of gears (64,66) circumferentially overlap one another.

9. The gas turbine engine according to any preceding claim, wherein the housing (62) includes a locating feature (128) configured to circumferentially locate and align at least one of the first and second tower shafts (68,70) relative to at least one of the first and second turbine shafts (40,52).

10. The gas turbine engine according to claim 9, wherein the locating feature (128) includes a bore (122) and a first cover (118) that has an eccentric pilot (124) received in the bore (122), the first cover (118) includes a hole (126) and is rotatable within the bore (122) to reposition the hole (126) relative to the housing (62), the hole (126) supporting one of the first and second tower shafts (68,70).

11. The gas turbine engine according to claim 10, wherein the housing (62) includes a second cover (120) opposite the first cover (118) and configured to facilitate insertion of one of the first and second tower shafts (68,70) into the housing (62) during assembly.

12. A method of installing an accessory gearbox (60) onto a gas turbine engine (20), the method comprising the steps of:
mounting a gearbox housing (62) onto an engine static structure (36), the gearbox housing (62) having first and second opposing sides (80,82);
inserting a first tower shaft (68) into the first side (80) of the housing (62), through the second side (82), and into the engine static structure (36) to couple the first tower shaft (40) with a first turbine shaft (40) in the static structure (36) and a first gear set (64) in the gearbox housing (62); and
inserting a second tower shaft (70) into the first side (80) of the housing (62), through the second side (82), and into the engine static structure (36) to couple the second tower shaft (70) with a second turbine shaft (54) in the static structure (36) and a second gear set (66) in the gearbox housing (62).

13. The method according to claim 12, wherein the first set of gears (64) is not in meshing engagement with the second set of gears (66).

14. The method according to claim 12 or 13, comprising the step of adjusting a position of a locating feature to circumferentially locate and align at least one of the first and second tower shafts (68,70) relative to at least one of the first and second turbine shafts (40,54).

15. The method according to claim 12, 13 or 14, wherein the inserting steps include installing the first and second tower shafts (68,70) in a generally radial direction relative to the rotational axis, the first and second tower shafts (68,70) at an acute angle circumferentially relative to one another.
